(19) **Europäisches Patentamt**

**European Patent Office**

**Office européen des brevets**

(11) **EP 1 092 694 A1**

(12) **EUROPEAN PATENT APPLICATION**
published in accordance with Art. 158(3) EPC

(43) Date of publication:
18.04.2001 Bulletin 2001/16

(51) Int. Cl.$^7$: **C04B 35/46**, C04B 35/50, H01B 3/12

(21) Application number: 98923115.4

(22) Date of filing: 04.06.1998

(86) International application number:
PCT/JP98/02466

(87) International publication number:
WO 99/62839 (09.12.1999 Gazette 1999/49)

(84) Designated Contracting States:
DK FI

(71) Applicant:
SUMITOMO SPECIAL METALS COMPANY LIMITED
Osaka-shi, Osaka 541-0041 (JP)

(72) Inventors:
• ANDO, Ryouichi
. (JP)

• SHIMADA, Takeshi
Kyoto-shi, Kyoto 616-8105 (JP)
• KAGEYAMA, Keisuke
Toyonaka-shi, Osaka 560-0004 (JP)

(74) Representative:
Puranen, Maija-Liisa et al
Kolster Oy Ab,
Iso Roobertinkatu 23,
P.O. Box 148
00121 Helsinki (FI)

(54) **MICROWAVE DIELECTRIC CERAMIC COMPOSITION**

(57)     A microwave dielectric ceramic composition exhibiting excellent relative permittivity ($\varepsilon$) and high Qf-value, enabling the temperature coefficient of resonance frequency to be easily adjusted, and being best suited for a filter having cavities made of, e.g., iron or copper exhibiting a large temperature coefficient of resonance frequency. The ceramic is of a $BaO$-$TiO_2$-$Nd_2O_3$-$Sm_2O_3$ type wherein $Nd_2O_3$ is partly substituted by $Bi_2O_3$ and $Nd_2O_3$ is partly substituted by $Ln_2O_3$ (where Ln is La or Pr) to accomplish the properties of $\varepsilon$ of 90 to 93.5, Qf of 6800 to 7000 GHz and $\tau f$ of 2.3 to 4.0 ppm/°C. This makes it possible to impart favorable electric characteristics to resonance cavities of various materials and sizes.

**EP 1 092 694 A1**

**Description**

TECHNICAL FIELD

The present invention relates to a dielectric ceramic composition whose chief constituents are Ba, Ti, Sm, Nd, La, Pr, Bi and $O_2$ and having the properties $\varepsilon$ = 90 to 93.5, Qf = 6800 to 7000 GHz, $\tau$f = 2.3 to 4.0 ppm/$°$C which is capable of being employed as a dielectric resonance material or frequency adjusting rod thereof.

BACKGROUND ART

In recent years, with the development of new media in the field of electronic technology there has been rapid progress in miniaturization and digitization. In particular in the field of communications using microwaves such as satellite communication, car phones, and mobile telephones advanced miniaturization of components and high levels of reliability are being demanded.

In conventional microwave circuits cavity resonators or waveguides are employed as filter or transmission circuits so this has presented an obstacle to such miniaturization and enhanced reliability. Specifically, in cavity resonators or waveguides, basically the stability of air or vacuum as a propagation medium for electromagnetic waves is made use of; in order to miniaturize microwave circuitry as aforesaid, a propagation medium may be employed which has a larger dielectric constant than the dielectric constant of air or vacuum and which has the same level of high stability in respect of temperature as air or vacuum. If this is done, the propagation wavelength of the microwaves in the medium is $1/\sqrt{(\varepsilon r)}$ (where $\varepsilon$r is the relative permittivity), so the resonant wavelength is also $1/\sqrt{(\varepsilon r)}$ and miniaturization can be achieved.

Previous microwave dielectric ceramic compositions that have been proposed include $BaO$-$TiO_2$-$Nd_2O_3$-$Bi_2O_3$ based ceramics (Laid-open Japanese Patent Publication Sho. 56-102003) and $BaO$-$TiO_2$-$Sm_2O_3$-$CeO_2$-$Bi_2O_3$ based ceramics (Laid-open Japanese Patent Publication Sho. 62-187162). However, these materials suffered from the problems of their Qf value as a microwave communication dielectric being low at 4000 to 6500 and that adjustment of the temperature characteristic of frequency for various cavities was not easy.

Also, $BaO$-$TiO_2$-$Ln_2O_3$ based ceramics (where $Ln_2O_3$ represents addition of $Cr_2O_3$ to $Nd_2O_3$ or $Pr_6O_{11}$) (Japanese Laid-open Patent Publication H. 7-169326) have a relative permittivity value ($\varepsilon$) of 91 to 93, but they were subject to the problems that their Q value is low at 5700 to 6000, and their temperature coefficient $\tau$f of resonance frequency is 6 to 9 ppm/$°$C, so that they cannot be employed in filters where the cavity material has a large temperature coefficient of resonance frequency, such as iron or copper.

DISCLOSURE OF THE INVENTION

An object of the present invention is to provide a microwave dielectric ceramic composition whereby the problems of the prior art microwave dielectric ceramic composition are solved, which is of excellent relative permittivity ($\varepsilon$) characteristic, has a high Qf value, whereby adjustment of the temperature coefficient of the resonance frequency can easily be achieved, and which is ideal for filters where the cavity material has a large temperature coefficient of resonance frequency, such as iron or copper.

As a result of various studies of ceramic compositions with the object of providing a microwave dielectric ceramic composition of high Qf value and of improved temperature characteristic, the present inventors discovered that the properties: $\varepsilon$ = 91.9 to 92, Qf = 6800 to 7000 GHz and $\tau$f = 2.3 to 4.0 ppm/$°$C could be obtained by, in a $BaO$-$TiO_2$-$Nd_2O_3$-$Sm_2O_3$ based ceramic, substituting some of the $Nd_2O_3$ by $Bi_2O_3$ and further substituting some of the $Nd_2O_3$ by $Ln_2O_3$ (where Ln = La, Pr).

Furthermore, the foregoing material may be sintered in the atmosphere; however, they discovered that, by sintering in an atmosphere containing at least 80% of oxygen, excellent properties in respect of the Qf value and/or $\tau$f value mentioned above are provided, and in addition permittivity is improved to 90 to 93.5, thereby perfecting the present invention.

BEST MODE FOR CARRYING OUT THE INVENTION

The present invention consists in a microwave dielectric ceramic composition whose compositional formula is represented by:

$$Ba_{6-3x} \cdot \{Sm_{1-y} \cdot (Nd_{1-v}Ln_v)_{y-z}Bi_z\}_{8+2x} \cdot Ti_{18}O_{54} \text{ (where Ln = La, Pr)}$$

where the values of x, y, z and v in the compositional formula satisfy the following values.
$0.5 < x < 0.8$, $0.3 < y < 0.5$, $0 < z < 0.4$, $0 < v \leqq 1$

The reasons for the restrictions in the composition of the present invention will now be described. In a dielectric ceramic composition of compositional formula $Ba_{6-3x} \cdot \{Sm_{1-y} \cdot (Nd_{1-v}Ln_v)_{y-z}Bi_z\}_{8+2x} \cdot Ti_{18}O_{54}$, if x is less than 0.5, the Q value of the dielectric falls; if it is more than 0.8, the permittivity falls; these are therefore undesirable. Also, if y is less than 0.3, this tends to cause a drop in permittivity, while if it is more than 0.5, the Q value falls: these are therefore undesirable. Furthermore, if z exceeds 0.4, the Q value drops severely; this is therefore undesirable.

Also, in the above compositional formula, if v is zero, the permittivity becomes low, so it is desirable that v is not zero.

The properties of the dielectric ceramic composition of the present invention can be continuously varied between $\varepsilon$ = 90 to 93.5 and temperature characteristic of frequency 2.3 to 4.0 ppm/°C. Excellent electrical properties can thereby be conferred on resonance cavities of various materials and sizes.

Examples

Example 1

$BaCO_3$, $Sm_2O_3$, $Nd_2O_3$, $La_2O_3$, $Bi_2O_3$, and $TiO_2$ powder of grain size of 1 μm or less, according to the compositional formula $Ba_{6-3x} \cdot \{Sm_{1-y} \cdot (Nd_{1-v}Ln_v)_{y-z}Bi_z\}_{8+2x} \cdot Ti_{18}O_{54}$ were blended and mixed with x = 0.7, y = 0.4, z = 0.1, and v = (0.5, 0.6), before molding under pressure of 1.5 T/cm$^2$ followed by sintering for three hours at 1370°C in air and in a 100% $O_2$ atmosphere to manufacture dielectric ceramics which were used to produce 4.7 GHz band resonators whose properties are shown in Table 1.

Example 2

$BaCO_3$, $Sm_2O_3$, $Nd_2O_3$, $Pr_6O_{11}$, $Bi_2O_3$, and $TiO_2$ powder of grain size of 1 μm or less, according to the same compositional formula as in Example 1 were blended and mixed with x = 0.7, y = 0.4, z = 0.1, and v = (0.4, 0.5), before manufacturing dielectric ceramics under the same manufacturing conditions as in Example 1 which were used to produce 4.7 GHz band resonators whose properties are shown in Table 1.

Comparison

$BaCO_3$, $Sm_2O_3$, $Nd_2O_3$, $La_2O_3$, $Bi_2O_3$, and $TiO_2$ powder of grain size of 1 μm or less, according to the compositional formula $Ba_{6-3x} \cdot \{Sm_{1-y} \cdot (Nd_{1-v}Ln_v)_{y-z}Bi_z\}_{8+2x} \cdot Ti_{18}O_{54}$ were blended and mixed with x = 0.7, y = 0.4, z = 0.1, and v = 0, before manufacturing dielectric ceramics obtained under the same manufacturing conditions as in the examples which were used to produce resonators the same as in the examples whose properties were examined and are shown in Table 1. Also, with the aforesaid compositional formula, dielectric ceramics of the composition x = 0.7, y = 0.4, z = 0, v = 1, Ln = La or Pr were manufactured under the same conditions as in the examples and their properties are shown in Table 1.

Table 1

| Sintering atmosphere | Composition | Ln = La | | Ln = Pr | |
|---|---|---|---|---|---|
| | | v = 0.5 | v = 0.4 | v = 0.5 | v = 0.4 |
| In air | Qf(GHz) | 6936 | 6925 | 6832 | 6869 |
| | $\varepsilon$ | 91.91 | 91.70 | 90.13 | 90.99 |
| | τf(ppm/°C) | 3.35 | 2.75 | 3.93 | 3.01 |
| In 100% $O_2$ atmosphere | Qf(GHz) | 6935 | 6970 | 6899 | 6991 |
| | $\varepsilon$ | 93.04 | 92.83 | 91.27 | 91.52 |
| | τf(ppm/°C) | 3.41 | 3.0 | 3.88 | 2.27 |
| | Composition | v = 0 | z = 0 Ln = La | z = 0 Ln = Pr | |
| comparison | Qf(GHz) | 6100 | 9400 | 9000 | |
| | $\varepsilon$ | 89.5 | 83.8 | 82.5 | |
| | τf(ppm/°C) | -20 | 16.1 | 11.8 | |

INDUSTRIAL APPLICABILITY

In a $BaO$-$TiO_2$-$Nd_2O_3$-$Sm_2O_3$ based ceramics, by substituting some of the $Nd_2O_3$ by $Bi_2O_3$ and furthermore by substituting some of the $Nd_2O_3$ by $Ln_2O_3$ (where Ln = La, Pr), the properties $\varepsilon$ = 90 to 93.5, Qf = 6800 to 7000 GHz, $\tau$f = 2.3 to 4.0 ppm/$^\circ$C were obtained.

**Claims**

1. A microwave dielectric ceramic composition whose compositional formula is represented by:

$$Ba_{6-3x} \bullet \{Sm_{1-y} \bullet (Nd_{1-v}Ln_v)_{y-z}Bi_z\}_{8+2x} \bullet Ti_{18}O_{54} \text{ (where Ln = La, Pr)}$$

where the values of x, y, z and v in the compositional formula satisfy the following values:
$0.5 < x < 0.8$, $0.3 < y < 0.5$, $0 < z < 0.4$, $0 < v \leqq 1$

## INTERNATIONAL SEARCH REPORT

| International application No. |
| --- |
| PCT/JP98/02466 |

| A. CLASSIFICATION OF SUBJECT MATTER |
| --- |
| Int.Cl⁶ C04B35/46, C04B35/50, H01B3/12 |

According to International Patent Classification (IPC) or to both national classification and IPC

**B. FIELDS SEARCHED**

Minimum documentation searched (classification system followed by classification symbols)
Int.Cl⁶ C04B35/42-35/50, H01B3/00-3/14

| Documentation searched other than minimum documentation to the extent that such documents are included in the fields searched |
| --- |
| Jitsuyo Shinan Koho 1926-1996 Toroku Jitsuyo Shinan Koho 1994-1998 |
| Kokai Jitsuyo Shinan Koho 1971-1998 Jitsuyo Shinan Toroku Koho 1996-1998 |

Electronic data base consulted during the international search (name of data base and, where practicable, search terms used)
CA (STN), CAOLD (STN), REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| X | JP, 3-69560, A (Oki Electric Industry Co., Ltd.), March 25, 1991 (25. 03. 91), Claims (Family: none) | 1 |
| X | JP, 55-131901, A (KCK K.K.), October 14, 1980 (14. 10. 80), Claims (Family: none) | 1 |
| X | JP, 3-192606, A (Oki Electric Industry Co., Ltd.), August 22, 1991 (22. 08. 91), Claims (Family: none) | 1 |
| X | JP, 4-265269, A (Oki Electric Industry Co., Ltd.), September 21, 1992 (21. 09. 92), Claims (Family: none) | 1 |
| A | JP, 8-17243, A (Tokin Corp.), January 19, 1996 (19. 01. 96), Claims (Family: none) | 1 |

| ☒ Further documents are listed in the continuation of Box C. | ☐ See patent family annex. |
| --- | --- |

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| August 13, 1998 (13. 08. 98) | August 25, 1998 (25. 08. 98) |

| Name and mailing address of the ISA/ Japanese Patent Office | Authorized officer |
| --- | --- |
| Facsimile No. | Telephone No. |

Form PCT/ISA/210 (second sheet) (July 1992)

EP 1 092 694 A1

## INTERNATIONAL SEARCH REPORT

International application No.

PCT/JP98/02466

C (Continuation).   DOCUMENTS CONSIDERED TO BE RELEVANT

| Category* | Citation of document, with indication, where appropriate, of the relevant passages | Relevant to claim No. |
|---|---|---|
| A | JP, 8-335810, A (Tokin Corp.), December 17, 1996 (17. 12. 96), Claims (Family: none) | 1 |
| A | JP, 5-97508, A (Murata Mfg. Co., Ltd.), April 20, 1993 (20. 04. 93), Claims (Family: none) | 1 |

Form PCT/ISA/210 (continuation of second sheet) (July 1992)

6